# EUROPÄISCHE PATENTSCHRIFT

(11) **EP 3 065 509 B1**
(45) Veröffentlichungstag und Bekanntmachung des Hinweises auf die Patenterteilung: **20.12.2017**
(21) Anmeldenummer: 16152111.7
(22) Anmeldetag: 20.01.2016
(51) Int. Cl.: H05B 33/08

(54) **LED-BELEUCHTUNGSEINRICHTUNG**
LED LIGHTING DEVICE
DISPOSITIF D'ECLAIRAGE A DEL

(30) Priorität: 06.03.2015 DE 102015103332
(43) Veröffentlichungstag der Anmeldung: 07.09.2016
(73) Patentinhaber: Schott AG, 55122 Mainz (DE)
(72) Erfinder: Wölfing, Bernd, 55122 Mainz (DE); Hatzenbühler, Andreas, 55546 Neu-Bamberg (DE)
(74) Vertreter: Blumbach Zinngrebe

(56) Entgegenhaltungen:
- EP-A2- 2 670 219
- US-A1- 2010 308 739
- US-A1- 2011 273 103

## Beschreibung

### Gebiet der Erfindung

Die Erfindung betrifft eine LED-Beleuchtungseinrichtung insbesondere zum Zwecke der Kabinenbeleuchtung.

### Hintergrund und allgemeine Beschreibung der Erfindung

Der Markt für Leuchtmittel und Beleuchtungseinrichtungen unterliegt einer rasanten technologischen Entwicklung und ist in hohem Maße sensibel hinsichtlich der Herstellungskosten solcher Beleuchtungseinrichtungen. Besonders Licht emittierende Dioden (LED) definieren hierbei die Spitze der derzeitigen Forschungsbemühungen, beispielsweise im Allgemeinbeleuchtungsbereich, aber auch beispielsweise im Automobilbereich und in der Aviatik.

Überall dort, wo einerseits niedriger Energieverbrauch oder andererseits besondere Gestaltungsmöglichkeiten gesucht werden, halten LED-Lampen vermehrt Einzug.

So ist es allgemein bekannt, eine Vielzahl von einzelnen LEDs in einer Lampe gemeinsam unterzubringen, um entweder die Lichtstärke zu erhöhen, oder andererseits beispielsweise eine flächige oder allgemein eine ausgedehnte Lichtfläche darzustellen. Im Allgemeinbeleuchtungsbereich sind hier beispielsweise Deckenpaneele in Großraumbüros zu nennen, die bislang mit Leuchtstoffröhren realisiert wurden, und nun mehr und mehr durch LEDs ersetzt werden. Im Automobilbereich wird hingegen vermehrt der gestalterische Aspekt genutzt, der sich durch das Verteilen von LEDs beispielsweise entlang Karosserielinien bietet.

Die Veröffentlichungsschrift US 2010/0308739 A1 zeigt ein System um Wechselspannungsquellen für Beleuchtungseinrichtungen bereitzustellen.

Auch in der Aviatik, beispielsweise im Bereich von Kabinenbeleuchtungen in Großraumflugzeugen, wäre es wünschenswert, die bekannten Lichtpaneele durch moderne LED-Lichttechnik zu ersetzen.

In der Aviatik stellt allerdings die zum Teil deutlich schwankende Spannungsversorgung der Kabine eine hohe Hürde. So kann die APU ("Auxiliary Power Unit", dt. Hilfstriebwerk) eines Großraumflugzeugs beispielsweise einen anderen Spannungspegel bereitstellen als die Bodenstromversorgung, an die Flugzeuge typischerweise am Boden angeschlossen werden. Auch der Spannungspegel der Bodenstromversorgung kann von Flughafen zu Flughafen unterschiedlich sein; Schließlich kann auch beispielsweise die APU einen schwankenden Spannungspegel liefern. Schließlich kommt es auch vor, dass Überspannungen auftreten, die die akzeptierte Eingangsspannung der Kabinenbeleuchtung übersteigen und die zu Defekten an der Kabinenbeleuchtung führen können.

Bei bekannten Kabinenbeleuchtungen werden Spannungsschwankungen typischerweise so ausgeglichen, dass die Helligkeit der Kabinenbeleuchtung schwankt. Bei höherer Spannung wird dabei also eine höhere Leistung von der Kabinenbeleuchtung umgesetzt. Beim Anschluss des Flugzeugs an die Bodenstromversorgung steigt oder fällt die Helligkeit der Kabinenbeleuchtung, aber auch im Betrieb des Flugzeugs kann diese deutlich sichtbaren Schwankungen unterliegen.

Eine wesentliche technische Herausforderung resultiert daher daraus, verschiedene Spannungspegel für eine Leuchte zu akzeptieren, idealerweise aber stets eine möglichst konstante Helligkeit mit der Lampe zu liefern.

Ein weiteres Problem ergibt sich aus der Tatsache, dass LEDs Gleichstrom-Bauteile sind, die an typischerweise vorhandene Wechselstromquellen anzuschließen sind. Dies ist besonders hinsichtlich des Kostenaspekts relevant, da selbstverständlich schon viele Wege bekannt sind, aus Wechselspannung eine Gleichspannung zu erhalten, bspw. mittels herkömmlichen Netzteilen, hier jedoch stets nach weiteren Vereinfachungen und/oder Kosteneinsparungen bspw. für den Massenmarkt gesucht wird. Insbesondere wenn noch hohe Anforderungen an den Power Faktor gestellt werden ist der herkömmliche Schaltungsaufwand erheblich.

Schließlich ist es auch wünschenswert, wenn die Anzahl der Bauteile, die zum Anschließen der Lampe an die Wechselspannungsquelle nötig sind, verringert werden, um beispielsweise den Wartungsaufwand verringern zu können, falls die Lampe in einem Einsatzbereich eingesetzt wird, wo Lampen noch gewartet werden (z.B. in der Aviatik).

Vor diesem Hintergrund hat die Anmelderin Schott AG eine LED-Beleuchtungseinrichtung entwickelt, die die Aufgabe löst, zeitlich variable Spannungsquellen zu tolerieren.

Überdies vermag die von der Anmelderin entwickelte LED-Beleuchtungseinrichtung bei ausgedehnten Leuchten eine besonders gleichmäßige Helligkeitsverteilung zu erreichen.

Insbesondere kann die entwickelte LED-Beleuchtungseinrichtung eine konstante Helligkeit auch bei schwankender Amplitude der Wechselspannungsversorgung bereitstellen.

Schließlich vermag die entwickelte LED-Beleuchtungseinrichtung Überspannungen auf besonders einfache Weise zu tolerieren und so die Lebensdauer der LED-Beleuchtungseinrichtung in einem von Überspannungen bedrohten Umfeld zu erhöhen.

Weitere Aufgaben ergeben sich aus der nachfolgenden Beschreibung bzw. den besonderen Vorteilen die mit bestimmten Ausführungsformen erzielt werden.

Die Aufgabe wird durch den Gegenstand der unabhängigen Ansprüche gelöst. Vorteilhafte Ausführungsformen sind Gegenstand der abhängigen Ansprüche.

Die Erfindung beschreibt eine LED-Beleuchtungseinrichtung zum Anschluss an eine Wechselspannungsquelle. Die LED-Beleuchtungseinrichtung weist zumindest eine erste und eine zweite LED-Gruppe auf. Jede LED-Gruppe umfasst zumindest eine zu der jeweiligen LED-Gruppe zugeordnete LED. Die LED-Gruppen sind bevorzugt elektrisch seriell angeordnet.

Die erste LED-Gruppe umfasst bevorzugt zumindest zwei zu der ersten LED-Gruppe zugeordnete und elektrisch seriell angeordnete LEDs. Mit anderen Worten sind die zumindest zwei LEDs elektrisch seriell verbunden, beispielsweise kann die erste LED-Gruppe auch drei, vier, fünf, sechs oder sieben LEDs aufweisen, die elektrisch seriell verbunden sind. Im Falle mehrerer LEDs pro LED-Gruppe fließt durch die LEDs der ersten LED-Gruppe jeweils die gleiche Stromstärke, so dass alle LEDs der ersten LED-Gruppe - von möglichen Herstellungsschwankungen der LEDs abgesehen - im Wesentlichen die gleiche Helligkeit aufweisen. Die LEDs einer LED-Gruppe, beispielsweise der ersten LED-Gruppe, werden hierbei erfindungsgemäß gemeinsam aktiviert oder deaktiviert, sie bilden also in elektrischer Hinsicht eine Einheit.

Die zweite LED-Gruppe umfasst ebenfalls bevorzugt zumindest zwei zu der zweiten LED-Gruppe zugeordnete und elektrisch seriell angeordnete LEDs. Die LEDs der zweiten LED-Gruppe können dabei als elektrisch unabhängig von den LEDs der ersten Gruppe betrachtet werden, so dass zwar die zu der zweiten LED-Gruppe zugeordneten LEDs - analog den LEDs der ersten LED-Gruppe - stets gemeinsam betrachtet werden, aber die LEDs der ersten Gruppe typischerweise nicht mit den LEDs der zweiten Gruppe zusammen aktiviert oder deaktiviert werden.

In einer bevorzugten Ausführungsform sind auch weitere LED-Gruppen vorgesehen, wobei jede LED-Gruppe bevorzugt zumindest zwei LEDs umfasst, beispielsweise eine dritte, eine vierte, eine fünfte, eine sechste und/oder eine siebte LED-Gruppe vorgesehen. So kann, um ein Beispiel zu nennen, eine LED-Beleuchtungseinrichtung mit 7 LED-Gruppen und 6 LEDs je LED-Gruppe also insgesamt 42 Einzel-LEDs umfassen.

Die LED-Beleuchtungseinrichtung umfasst eine Verbindungseinrichtung zum Anschließen der LED-Beleuchtungseinrichtung an die Wechselspannungsquelle. Die Verbindungseinrichtung realisiert einerseits das Verbinden mit der Spannungsquelle, beispielsweise mittels eines Steckverbinders. Ferner umfasst die Verbindungseinrichtung einen Gleichrichter, wie einen Brückengleichrichter bzw. Diodengleichrichter. Der Gleichrichter vermag in bekannter Weise die Wechselspannungsquelle so zu verändern, dass keine negative Spannungsamplitude mehr an die Bauteile der LED-Beleuchtungseinrichtung gelangt, sondern alle Spannungsamplituden in positiver Richtung auslenken. Somit kann ein höherer Leistungsanteil der Spannungsquelle ausgenutzt werden. LEDs weisen typischerweise überdies eine Durchlass- und eine Sperrrichtung auf, wobei in Sperrrichtung betriebene LEDs ggf. sogar Schaden nehmen könnten.

Die LED-Beleuchtungseinrichtung umfasst ferner eine Gruppenaktivierungseinrichtung. Die Gruppenaktivierungseinrichtung aktiviert oder deaktiviert die LED-Gruppen insbesondere mittels eines Vorgabewertes, also ganz allgemein mittels einer Aktivierungsvorgabe. Beispielsweise kann eine Stromsollwertvorgabe vorgesehen sein. Mit anderen Worten gibt die Gruppenaktivierungseinrichtung jeweils einen Stromsollwert für jede LED-Gruppe vor, bevorzugt denselben Stromsollwert für jede LED-Gruppe.

Die Gruppenaktivierung soll anhand des folgenden Beispiels weiter erläutert werden, welches eine Möglichkeit der Realisierung der Gruppenaktivierungseinrichtung darstellt. Die Gruppenaktivierungseinrichtung umfasst in diesem Beispiel je eine zu jeder LED-Gruppe zugeordnete Stromregelung. Jede Stromregelung erhält eine Stromsollwertvorgabe. Mit ansteigender Flanke der anliegenden Spannungsquelle wird nun die erste LED-Gruppe mit elektrischer Energie versorgt, die LEDs beginnen zu leuchten. Sobald die Spannung ausreicht um eine weitere LED Gruppen in Reihe durchzuschalten beginnt Strom in dieser LED-Gruppe zu fließen. Insbesondere öffnet oder schließt die zu der ersten LED-Gruppe zugeordnete Stromregelung eine elektrische Verbindung dergestalt, dass nun auch die zweite LED-Gruppe vom Strom durchflossen wird. Auf die gleiche Weise werden mit weiter ansteigendem Spannungspegel der Spannungsquelle weitere LED-Gruppen aktiviert.

Grundsätzlich können die LED-Gruppen daher auch innerhalb des Zeitraumes einer Schwingungsperiode (Phase) der Wechselspannung in Ansprechen auf die gemessene Spannungsamplitude zu- bzw. abgeschaltet werden. Die Leistungsaufnahme der LED-Beleuchtungseinrichtung wird somit - auch und gerade innerhalb einer Schwingungsperiode - an die bereitgestellte Leistung der Spannungsquelle angepasst.

In einem einfachen Beispiel kann also - beginnend bei 0 Volt - in der ansteigenden Flanke zunächst die erste LED-Gruppe aktiviert werden und Strom durch die erste LED-Gruppe fließen. Die übrigen LED-Gruppen bleiben also zunächst inaktiv, bis ein von der Gruppenaktivierungseinrichtung festgelegter Schwellwert überschritten wird. Sobald der Schwellwert überschritten ist, wird die folgende LED-Gruppe aktiviert (oder deaktiviert bei abfallender Flanke). In dem Beispiel wird nach dem Überschreiten des Schwellwerts die zweite LED-Gruppe aktiviert. Falls weitere LED-Gruppen vorgesehen sind, wird beispielsweise beim überschreiten eines zweiten Schwellwerts s die dritte LED-Gruppe aktiviert.

In der abfallenden Flanke der Spannungsamplitude können die LED-Gruppen beispielsweise in umgekehrter Reihenfolge deaktiviert werden.

Durch das sukzessive aktivieren und deaktivieren von LED-Gruppen während einer Schwingungsperiode der Spannungsquelle wird somit eine Power-Faktor korrigierte (PFC, engl. "power factor corrected"), pseudo-ohmsche Last bereitgestellt, die unmittelbar an die Spannungsquelle angeschlossen werden kann.

Die durch jede LED-Gruppe fließende gewünschte Stromstärke kann vorzugsweise mittels der Stromregelung angepasst werden. Dies ermöglicht, im Falle einer schwankenden Spannungsquelle die LEDs, insbesondere die Helligkeit der LEDs, an den anliegenden Spannungspegel anzupassen. Beispielsweise weist die Spannungsquelle bei höherer Spannung einen steileren Phasenanstieg auf, so dass die LED-Gruppen geringfügig früher aktiviert werden. In Ansprechen auf die Steigung des Phasenanstiegs kann die Gruppenaktivierungseinrichtung daher vorzugsweise den bzw. die Schwellwert(e) der Stromregelung anpassen. Bei steilerem Phasenanstieg bedeutet dies, einen niedrigeren Schwellwert einzustellen, um im Ergebnis die gleiche Lichtausbeute aus den LEDs und somit Gesamthelligkeit zu erhalten.

Der Schwellwert für eine LED Gruppe ergibt sich insbesondere aus der anliegende Spannung. Jeder zugeschalteten LED-Gruppe ist ein Stromwert zugeordnet, der geregelt werden kann.

Mittels der Stromregelung lässt sich nicht nur die Helligkeit der LED-Beleuchtungseinrichtung möglichst konstant halten bei schwankender Spannungsquelle. Ferner kann die Stromregelung ferner so ausgebildet sein, dass die Helligkeit der LED-Beleuchtungseinrichtung auf einen gewünschten Wert eingestellt werden kann. Dies kann beispielsweise durch Anpassen der Aktivierungsvorgabe erreicht werden.

Mittels der Stromregelung zum Regeln des durch die zumindest erste LED-Gruppe fließenden Stroms können Helligkeitsschwankungen der LEDs aufgrund von Schwankungen der Spannungsamplitude der Spannungsquelle kompensiert werden. Die Stromregelung regelt ganz allgemein den durch die LED-Gruppe oder die LED-Gruppen fließenden Strom. Bevorzugt kann die Stromregelung den Strom für jede LED-Gruppe einzeln regeln bzw. bevorzugt ist jeweils eine separate Stromregelung für jede LED-Gruppe vorgesehen. Durch Einsatz einer abgestuften den LED-Gruppen zugeordneten Stromregelungen kann eine einstellbar gute PFC erreicht werden.

Die Stromregelung kann z.B. in einem einfachen Fall durch Operationsverstärker, Darlington-Transistoren oder auch FETs realisiert werden, die eine Sollstromstärke mit einer "IST"-Stromstärke im elektrischen Kreis vergleichen. Mittels der Regelung der Stromstärke der LEDs in einer LED-Gruppe durch die Stromregelung wird auch die Lichtabgabe der LED eingestellt.

Die Aktivierungsvorgabe kann auch eine Spannungswertvorgabe sein, wie anhand des folgenden Beispiels erläutert werden kann. Bei steigender Spannung der Spannungsquelle wird zunächst die erste LED-Gruppe aktiviert. Bei weiterem Anstieg der Spannung über die Schwellspannung, die beispielsweise knapp unterhalb der von den Einzel-LEDs maximal tolerierbaren Spannung liegt, kann in Ansprechen auf die gemessene Spannung die zweite LED-Gruppe aktiviert werden, z.B. mittels einer Aktivierungsvorgabe, wie beispielsweise eines Schaltsignals, von dem Signalgeber. Die zweite LED-Gruppe ist bevorzugt elektrisch seriell zu der ersten LED-Gruppe angeschlossen; Die an jeder Einzel-LED abfallende Spannung wird somit nach unten verschoben und die LEDs sowohl der ersten als auch der zweiten LED-Gruppe geben Licht in derselben Intensität ab. Steigt die Spannung der Spannungsquelle oder die an einer Einzel-LED abfallende Spannung erneut über die Schwellspannung, wird ggf. auch die dritte LED-Gruppe aktiviert, wodurch die an jeder Einzel-LED abfallende Spannung erneut reduziert wird.

Somit können die Einzel-LED stets in einem sicheren Bereich betrieben werden, ohne dass Schäden an Einzel-LEDs oder der LED-Beleuchtungseinrichtung auftreten.

Zur Abtastung des Phasenanstiegs bzw. zur Erkennung der Spannungsamplitude kann die Gruppenaktivierungseinrichtung einen Spannungsmesser zum Messen einer aktuell anliegenden Spannungsamplitude der Wechselspannungsquelle aufweisen. Der Spannungsmesser detektiert vorzugsweise kontinuierlich die Spannungsamplitude, um anhand dieser den bzw. die Schwellwert(e) einzustellen. Der Spannungsmesser integriert dabei bevorzugt über mehrere Perioden, um eine gleichmäßigere Lichtabgabe zu ermöglichen.

Das Aktivieren und Deaktivieren von LED-Gruppen während einer Schwingungsperiode erzeugt ein Flackern der LED-Beleuchtungseinrichtung. Jedoch ist dieses Flackern bereits bei Frequenzen typischer Haushaltswechselspannungen von bspw. 60Hz (wie in den Vereinigten Staaten von Amerika) oder 50 Hz (wie in Europa) durch das menschliche Auge nicht, oder nicht ohne Weiteres, feststellbar. Das Flackern ist also insgesamt deswegen tolerabel, weil es den ästhetischen Anspruch an die LED-Beleuchtungseinrichtung nicht stört. Vielmehr wird die Helligkeit der LED-Beleuchtungseinrichtung als konstant wahrgenommen. Die von den Einzel-LEDs insgesamt abgegebene Leuchtkraft wird vom menschlichen Auge über eine Phase als integrierter Gesamtwert wahrgenommen. Die Beiträge der LED-Gruppen zu dem Gesamtwert der Leuchtkraft sind dabei typischerweise unterschiedlich, da beispielsweise eine LED-Gruppe eine von einer anderen LED-Gruppe unterschiedliche Einschaltdauer aufweist. In der Aviatik werden darüber hinaus typischerweise Frequenzen im Bereich von 400 Hz für die Stromversorgung verwendet. Hier fällt das Flackern daher noch weit weniger auf.

Die Gruppenaktivierungseinrichtung der LED-Beleuchtungseinrichtung kann in einer Ausführungsform einen Signalgeber zum Erzeugen eines Schaltsignals in Ansprechen auf die aktuell anliegende Spannungsamplitude aufweisen. Die LED-Gruppen können auch mittels des Schaltsignals geschaltet, also aktiviert oder deaktiviert, werden. Mit anderen Worten ist die Aktivierungsvorgabe hierbei durch das Schaltsignal realisiert.

Erfindungsgemäß sind die Einzel-LEDs von LEDs benachbart umgeben, die zu der jeweils anderen LED-Gruppe zugeordnet sind. Mit anderen Worten ist eine LED der ersten LED-Gruppe so angeordnet, dass sie nur von LEDs benachbart ist, die nicht der ersten LED-Gruppe zugeordnet sind.

Besonders bevorzugt handelt es sich bei der LED-Beleuchtungseinrichtung um eine ausgedehnte LED-Beleuchtungseinrichtung. Mit anderen Worten weist die LED-Beleuchtungseinrichtung eine flächen- oder linienartige Erstreckung auf. Es hat sich im Rahmen der Erfindung herausgestellt, dass die Lichtverteilung der ausgedehnten LED-Beleuchtungseinrichtung über die Fläche bzw. Länge hinweg als besonders homogen wahrgenommen wird, wenn die LEDs einer LED-Gruppe über die Fläche bzw. Linie verteilt angeordnet sind. Die "Durchmischung" von Einzel-LEDs verschiedener Gruppen ist dabei sehr wirkungsvoll, wenn die LEDs einer Gruppe nicht nebeneinander eingesetzt werden. Besonders homogen wird die Lichtverteilung über die ausgedehnte LED-Beleuchtungseinrichtung dann, wenn sich die LEDs aller oder möglichst vieler der eingesetzten LED-Gruppen zueinander abwechseln.

Bevorzugt umfasst die LED-Beleuchtungseinrichtung ferner eine Schaltvorrichtung zum Zu- oder Abschalten von zumindest einer LED-Gruppe in Ansprechen auf das Schaltsignal. Somit sind die LEDs mittels der Schaltvorrichtung jeweils gruppenweise aktivierbar oder deaktivierbar.

Die LEDs der LED-Gruppen sind bevorzugt gleichmäßig über die von der LED-Beleuchtungseinrichtung eingenommene Fläche oder Linie verteilt. In einer besonderen Ausführungsform sind die LEDs der LED-Gruppen schachbrettartig über die von der LED-Beleuchtungseinrichtung eingenommene Fläche oder Linie verteilt. In der Analogie eines Schachbretts nehmen die LEDs der ersten Gruppe eine erste Farbe ein, die LEDs der zweiten Gruppen eine zweite Farbe. Im Falle von mehr als zwei Gruppen lässt sich die Schachbrettanalogie auf mehr als zwei Farben gedanklich erweitern. Dies könnte auch Schachbrettartig genannt werden.

Mit anderen Worten sind die LEDs einer LED-Gruppe beabstandet zueinander angeordnet. Die LEDs einer LED-Gruppe sind also bevorzugt verteilt angeordnet, so dass sich die LEDs einer LED-Gruppe über die gesamte Ausdehnung der LED-Beleuchtungseinrichtung verteilen.

Die LED-Beleuchtungseinrichtung umfasst bevorzugt zumindest eine weitere LED-Gruppe, wobei jede LED von solchen LEDs benachbart umgeben ist, die einer anderen LED-Gruppe zugeordnet sind.

Die optionale Schaltvorrichtung der LED-Beleuchtungseinrichtung kann so hergerichtet sein, dass sie die Anzahl aktiver LED-Gruppen so einstellt, dass die LEDs der LED-Gruppen in der Nähe ihrer Nominalspannung betrieben werden. Werden die LEDs im Bereich der Nominalspannung betrieben, ergibt sich die höchste mögliche Lichtausbeute, so dass der Wirkungsgrad der LED-Beleuchtungseinrichtung steigt. Aber auch mittels der Sollwertvorgabe beispielsweise des Stromschwellwerts kann ein Betrieb der LEDs im Bereich der Nominalspannung realisiert werden.

Bevorzugt weist die LED-Beleuchtungseinrichtung zumindest ein überspannungsabführendes Bauteil bzw. allgemein ein spannungsabführendes Bauteil auf. Das spannungsabführende Bauteil kann bevorzugt eine Überschuss- bzw. eine Überspannung aufnehmen, so dass die LEDs der LED-Gruppen auch bei Überschreiten der maximalen Summenspannung über alle Einzel-LEDs keinen Schaden nehmen. Eine Überspannung liegt dann vor, wenn die Spannungsamplitude der Versorgungsspannung oberhalb des Spannungspegels liegt, für die die LED-Beleuchtungseinrichtung im Normalbetrieb ausgelegt ist.

Vielmehr wird die überschüssige Spannung in das spannungsabführende Bauteil abgeführt. Das zumindest eine spannungsabführende Bauteil ist besonders bevorzugt ein nichtleuchtendes Bauteil, beispielsweise nichtleuchtende Dioden oder Widerstände. Das spannungsabführende Bauteil kann ggf. durch eine zu den übrigen LED-Gruppen ansonsten identische LED-Gruppe gebildet werden, die lediglich abgedeckt bzw. verdunkelt angebracht ist, so dass diese LED-Gruppe nicht zu der Gesamthelligkeit der LED-Beleuchtungseinrichtung beiträgt.

Kommt es zu einer Überspannung, die beispielsweise im Bereich der Aviatik regelmäßig auftreten kann, wird somit die LED-Beleuchtungseinrichtung - im Unterschied zu herkömmlichen Leuchten - nicht heller bzw. einer Helligkeitsschwankung unterliegen, sondern die zusätzliche Leistung aus der Überspannung kann von dem spannungsabführenden Bauteil abgeführt werden.

Bevorzugt ist die Gruppenaktivierungseinrichtung hergerichtet, die Überschussspannung über das zumindest eine spannungsabführende Bauteil abzuleiten. Hierfür kann die Gruppenaktivierungseinrichtung das nichtleuchtende Bauteil in Serie zu den LED-Gruppen bei Bedarf hinzuschalten.

Mit anderen Worten kann das nichtleuchtende Bauteil eine Überspannung zuverlässig abführen, die LED-Beleuchtungseinrichtung so vor Schäden bewahren und zugleich ungewünschte Helligkeitsschwankungen der LED-Beleuchtungseinrichtung vermeiden.

Bei der LED-Beleuchtungseinrichtung können die LEDs der genannten LED-Gruppen zu einem ersten Diodenstrang zugeordnet sein, wobei ferner ein zu dem ersten Diodenstrang elektrisch parallel angeordneter zweiter Diodenstrang mit weiteren LEDs eingesetzt ist, der ebenfalls weitere LED-Gruppen aufweist.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: ein einer Ausführungsform einer erfindungsgemäßen LED-Beleuchtungseinrichtung zugrundeliegendes Blockschaltbild,
- Fig. 2: exemplarischer Spannungsverlauf,
- Fig. 3: ein technisches Schaltbild einer realisierten LED-Beleuchtungseinrichtung,
- Fig. 4: eine photographische Darstellung einer im Labor bereits realisierten LED-Beleuchtungseinrichtung,
- Fig. 5: eine photographische Darstellung einer weiteren Ausführungsform der LED-Beleuchtungseinrichtung, linienartig ausgedehnt,
- Fig. 6: Graph einer möglichen Korrektur der Stromstärke durch die Stromregelungen,
- Fig. 7a: beispielhafter Spannungsverlauf,
- Fig. 7b: beispielhafter Spannungsverlauf mit höherer Amplitude.

### Detaillierte Beschreibung der Erfindung

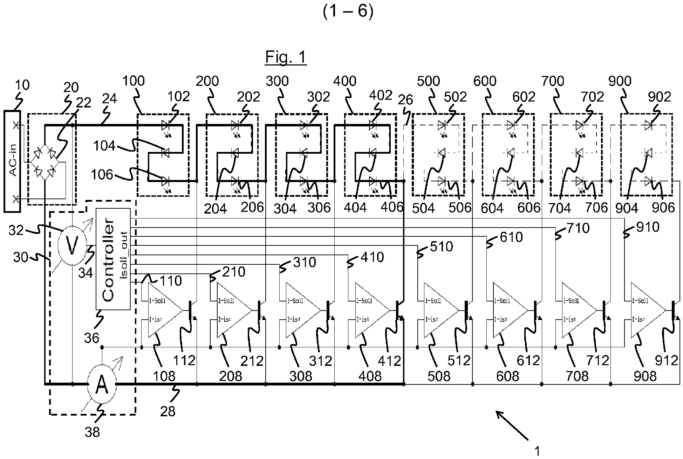

Fig. 1 zeigt ein vereinfachtes Blockschaltbild einer Ausführungsform der LED-Beleuchtungseinrichtung 1. In dieser Ausführungsform sind sieben LED-Gruppen 100, 200, 300, 400, 500, 600 und 700 vorhanden. Die LED-Gruppen 100, 200, 300, 400, 500, 600 und 700 verfügen in diesem Beispiel über jeweils eine erste, zweite und dritte LED 102, 104, 106, 202, 204, 206 etc. Mit anderen Worten umfasst die erste LED-Gruppe 100 die erste LED 102, die zweite LED 104 sowie die dritte LED 106. Die zweite LED-Gruppe 200 umfasst die erste LED 202, die zweite LED 204 sowie die dritte LED 206. Insgesamt sind in dieser Ausführungsform also 3 mal 7, d.h. 21 LEDs 102, 104, 106, 202, 204, 206, 302, 304, 306, 402, 404, 406, 502, 504, 506, 602, 604, 606, 702, 704, 706 vorhanden, die zu Beleuchtungszwecken eingesetzt werden.

Eine Spannungsquelle 10 stellt eine Wechselspannung bereit, an die die LED-Beleuchtungseinrichtung 1 über die Verbindungseinrichtung 20 angeschlossen ist. Die Verbindungseinrichtung 20 umfasst einen Gleichrichter 22.

In dem gezeigten Beispiel der Fig. 1 ist ein spannungsabführendes Bauteil 900 vorhanden, welches weitere Dioden 902, 904 und 906 umfasst. Das spannungsabführende Bauteil 900 vermag Überspannungen sicher aufzunehmen und somit die LEDs der LED-Gruppen vor einer Beschädigung zu schützen.

In dem spannungsabführenden Bauteil 900 können auch ohm'sche Widerstände 902, 904, 906 eingesetzt sein, um die Überspannungen aufzunehmen.

Die erste LED-Gruppe 100 sowie die zweite, dritte und vierte LED-Gruppe 200, 300, 400 werden in dem Beispiel der Fig. 1 von Strom durchflossen, was anhand der durchgezogenen elektrischen Leitung 24 verdeutlicht ist. Die weiteren LED-Gruppen 500, 600, 700 sowie das spannungsabführende Bauteil 900 sind in diesem Beispiel hingegen deaktiviert, was anhand der gestrichelten elektrischen Leitung 26 verdeutlicht ist.

Die LED-Beleuchtungseinrichtung 1 weist eine Gruppenaktivierungseinrichtung 30 auf, die in Ansprechen auf eine gemessene Spannung des Spannungsmessers 32 einzelne oder alle LED-Gruppen aktiviert. Beispielsweise wird ein Stromsollwert als Aktivierungsvorgabe bzw. als Signal über die Signalleitungen 110, 210, 310, 410, 510, 610, 710 an die Stromregelungen 108, 208, 308, 408, 508, 608, 708 übertragen wird.

Ein Spannungsmesser 32 misst die von der Spannungsquelle 10 zur Verfügung gestellte Spannungsamplitude. Der Spannungsmesser 32 misst in diesem Beispiel elektrisch nach dem Gleichrichter 22, so dass der Spannungsmesser 32 bereits nur positive Halbwellen der Wechselspannung misst. Das von dem Spannungsmesser 32 erhaltene Spannungssignal wird über eine Spannungssignalleitung 34 an den Signalgeber 36 übertragen.

Der Signalgeber 36 wiederum vermag die einzelnen LED-Gruppen 100, 200, 300, 400, 500, 600, 700 und das spannungsabführende Bauteil 900 mittels der Aktivierungsvorgabe oder eines Schaltsignals zu aktivieren oder zu deaktivieren. In dem vorliegenden Beispiel ist hierfür in dem Signalgeber 36 zunächst ein Stromschwellwert I-Soll abgelegt, der als Vorgabewert über Signalleitungen 110, 210, 310, 410, 510, 610, 710, 910 an die Stromregelungen 108, 208, 308, 408, 508, 608, 708, 908 übertragen wird.

Beispielsweise wird der Stromschwellwert I-Soll über die Signalleitung 110 zu der ersten Stromregelung 108 übertragen, wobei die erste Stromregelung 108 hergerichtet ist, die Stromstärke der durch die LEDs 102, 104, 106 der ersten LED-Gruppe 100 zu regeln.

Die Stromregelung 108 - wie in dem Beispiel der Fig. 1 auch die Stromregelungen 208, 308, 408, 508, 608, 708, 908 - erhält als weitere Referenz die mittels der Strommesseinrichtung 38 aktuell gemessene Stromstärke, um die gemessene Stromstärke hernach an den Vorgabewert I-Soll anzupassen. Die Strommesseinrichtung 38 ist hier in die elektrische Leitung 28 eingesetzt. Nach einem Vergleich der von der Strommesseinrichtung 38 gemessenen Stromstärke I-Ist mit der als Vorgabewert I-Soll als Schaltsignal über die Signalleitung 110 übertragene Sollstromstärke durch die Stromregelung 108 regelt diese also die durch die LEDs 102, 104, 106 der ersten LED-Gruppe 100 fließende Stromstärke.

Bevorzugt ist, wie in der Ausführungsform der Fig. 1 gezeigt, jeder Gruppe 100, 200, 300, 400, 500, 600, 700, 900 eine Schaltvorrichtung 112, 212, 312, 412, 512, 612, 712, 912 zugeordnet.

Beispielsweise wirkt die Stromregelung 108 so auf die Schaltvorrichtung 112, dass die erste LED-Gruppe 100 in Ansprechen auf das Schaltsignal gruppenweise aktivierbar oder deaktivierbar ist. Dies lässt sich - mutatis mutandis - auf die weiteren Gruppen übertragen. Z.B. sind im Ausgangszustand die Stromregelungen so eingestellt, dass der Strom durch die erste LED-Gruppe und durch die geschlossene erste Schaltvorrichtung 112 - z.B. den Transistor 112 - fließt. Bei ansteigender Spannung schließt auch die zweite Schaltvorrichtung 212, wobei ggf. die erste Schaltvorrichtung öffnet.

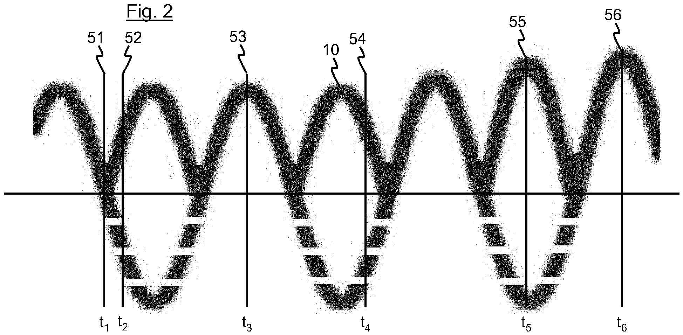

Fig. 2 zeigt einen möglichen Verlauf der Spannungsamplitude einer von der Spannungsquelle 10 bereitgestellten Wechselspannung. An den in der Fig. 2 eingetragenen Zeitlinien t₁, t₂, t₃, t₄, t₅ und t₆ wird der zugehörige Zustand der LED-Beleuchtungseinrichtung 1 beschrieben.

Beginnend mit t₁ beträgt die Amplitude der Spannungsquelle 0V. Es wird keine Leistung bereitgestellt, alle LEDs und somit alle LED-Gruppen sind deaktiviert.

Bei t₂ ist die Amplitude der Spannungsquelle ansteigend. Im Verlauf der Steigung werden sukzessive weitere LED-Gruppen aktiviert. Der Spannungsmesser 32 verfolgt den Verlauf der Amplitude und gibt den jeweiligen Spannungswert an den Signalgeber 36, der entsprechende Steuersignale an die Stromregler 108ff. ausgibt.

Bei t₃ ist die Amplitude der Spannungsquelle im Maximum. Je nach Auslegung der LED-Beleuchtungseinrichtung können nun alle LED-Gruppen 100 bis 700 aktiviert sein, so dass die maximale Lichtmenge abgegeben wird. Die Einzel-LEDs werden dabei stets im Bereich ihrer Nominalspannung betrieben, so dass eine optimale Effizienz gewährleistet wird.

Bei t₄ ist die Amplitude der Spannungsquelle abfallend. In weiteren Verlauf der abfallenden Flanke der Phase werden die LED-Gruppen sukzessive deaktiviert. Die LED-Beleuchtungseinrichtung folgt somit insgesamt mit ihrer Leistungsaufnahme der von der Spannungsquelle bereitgestellten Leistung, so dass die LED-Beleuchtungseinrichtung auch als pseudo-ohm'sche Last bezeichnet werden kann.

Bei t₅ ist eine Veränderung im Absolutwert der Amplitude zu beobachten; Hier ist eine schwankende Spannungsquelle 10 simuliert, die in einer größeren Zeitkonstante als dem Bereich einer Phase Schwankungen der Amplitude unterlieg, was beispielsweise in der Aviatik regelmäßig auftritt.

Bei t₅ können zwei verschiedene Fälle unterschieden werden. Einerseits der Fall, dass bei t₃ bereits alle LED-Gruppen der LED-Beleuchtungseinrichtung 1 aktiviert sind, wonach die bei t₅ dargestellte Amplitude der Spannungsquelle 10 bereits eine Überspannung darstellt. In diesem Fall wird die Gruppenaktivierungseinrichtung 30 der LED-Beleuchtungseinrichtung 1 bei weiter ansteigender Amplitude bereits das spannungsabführende Bauteil 900 aktivieren, so dass die Überspannung in das spannungsabführende Bauteil 900 abgeführt wird.

Andererseits kann die LED-Beleuchtungseinrichtung 1 in einem besonderen Fall auch so ausgelegt werden, dass im Bereich typischer Anlagenspannungen der Spannungsquelle 10 im Maximum der Phase der Wechselspannung noch nicht alle LED-Gruppen aktiviert sind. In diesem Fall würde bei t₅ in dem kurzen Zeitbereich, in dem der Absolutwert der Amplitude höher als bei t₃ ist eine zusätzliche LED-Gruppe, bspw. die in Fig. 1 gezeigte LED-Gruppe 500, aktiviert, die in den vorherigen Phasen nicht aktiviert wurde. In diesem Fall wäre die Effizienz der LED-Beleuchtungseinrichtung 1 höher, da auch solche Spannungsschwankungen zu einer erhöhten Lichtausbeute ausgenutzt werden kann. Jedoch ist in dieser besonderen Ausführungsform ggf. eine geringe Helligkeitsschwankung der LED-Beleuchtungseinrichtung 1 möglich, die anhand von Testreihen hinsichtlich der Sichtbarkeit und daraus folgend der ästhetischen Einschränkungen getestet werden kann.

Bei dem in Fig. 2 dargestellten Zeitpunkt t₆ ist schließlich eine Überspannung erreicht, die von dem spannungsabführenden Bauteil 900 in einfacher Weise so abgeführt werden kann, dass die LED-Beleuchtungseinrichtung 1 eine weiterhin konstante Lichtleistung abgibt.

Insgesamt ist daher festzustellen, dass mit der erfindungsgemäßen LED-Beleuchtungseinrichtung 1 ein Netzteil oder andere leistungsmindernde und/oder teure Bauteile eingespart werden können und die Schaltung insgesamt als eine Art pseudo-ohm'sche Last direkt über die Verbindungseinrichtung 20 an die Spannungsquelle 10 angeschlossen werden kann. Gerade in preissensitiven Märkten ist die Einsparung von weiteren Bauteilen gewünscht und daher Grundlage stetiger Weiterentwicklung und somit von Erfindungen. Aber auch der Gewichtsvorteil, der sich durch eingesparte Bauteile ergibt, ist insbesondere in der Aviatik erwünscht.

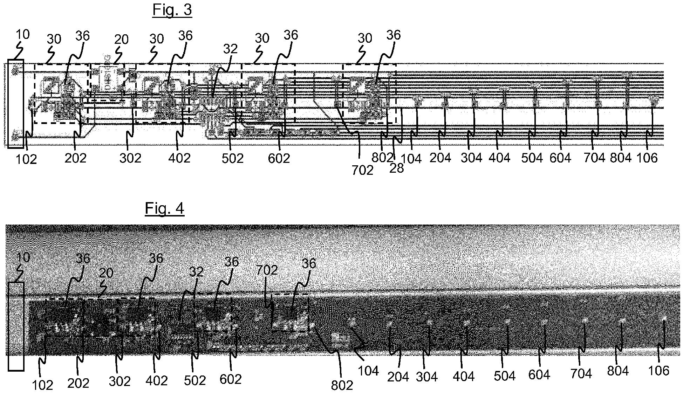

Fig. 3 zeigt ein technisches Schaltbild einer ausgedehnten LED-Beleuchtungseinrichtung 1. An einem ersten Ende der LED-Beleuchtungseinrichtung 1 wird die Schaltung mit Leistung von der Spanungsquelle 10 versorgt. An diesem Installationsende der LED-Beleuchtungseinrichtung 1 ist auch der Anschluss 20 sowie die Gruppenaktivierungseinrichtung 30 angeordnet. Die Gruppenaktivierungseinrichtung 30 ist in dieser Ausführungsform auf mehrere Bereiche der LED-Beleuchtungseinrichtung 1 aufgeteilt. Mit anderen Worten übernehmen mehrere ICs (integrated circuit) die Aufgabe der Gruppenaktivierungseinrichtung 30, wobei die ICs so auf einer Leiterplatine angeordnet werden, dass die weiteren Bauteile der Schaltung mit möglichst kurzen Leitungslängen und/oder mit möglichst wenig Installationsbedarf auf der Leiterplatine angesteuert bzw. versorgt werden können.

Beispielsweise ist in dieser Ausführungsform nicht nur ein Signalgeber 36 eingesetzt, sondern es sind vier Signalgeber 36 eingesetzt, wobei jeder der Signalgeber mit einem Teil der LED-Gruppen verbunden ist. Ein Spannungsmesser 32 ist ebenfalls vorgesehen.

Besonderes Augenmerk darf bei der in Fig. 3 gezeigten Ausführungsform auf die Anordnung der Einzel-LEDs sowie deren Gruppierung gerichtet werden. Benachbart zu dem Installationsende der LED-Beleuchtungseinrichtung 1 ist die erste LED 102 der ersten LED-Gruppe 100 angeordnet. Benachbart wiederum zu der genannten LED ist die erste LED 202 der zweiten LED-Gruppe 200 angeordnet. Wiederum hierzu benachbart angeordnet ist die erste LED 302 der dritten LED-Gruppe 300. Mit anderen Worten sind jeweils zueinander benachbart zunächst die ersten LEDs 102, 202, 302, 402, 502, 602, 702, 802 angeordnet. Auf die erste LED 802 der achten bzw. letzten Gruppe 800 folgt schließlich die zweite LED 104 der ersten Gruppe 100. Die weitere Bestückung wurde in diesem Beispiel mit den LEDs 204, 304, 404, 504, 604, 704, 804, 106 realisiert. Selbstverständlich können bei der ausgedehnten LED-Beleuchtungseinrichtung 1 auch weniger als acht oder mehr als acht LED-Gruppen verbaut werden, die acht LED-Gruppen 100, 200, 300, 400, 500, 600, 700, 800 dieses Beispiels sind lediglich beispielhaft zu verstehen.

In vorteilhafter Weise wird durch die Beabstandung der zu einer LED-Gruppe 100 - oder LED-Gruppe 200, 300, 400, 500, 600, 700, 800 - zugeordneten LEDs 102, 104, 106 (analog bei den übrigen LED-Gruppen) eine homogenere Lichtverteilung über die ausgedehnte LED-Beleuchtungseinrichtung 1 erreicht. Hierbei konnten die Erfinder herausfinden, dass der Effekt der als homogen wahrgenommenen Lichtverteilung der LED-Beleuchtungseinrichtung 1 gerade dann besonders positiv ausfällt, wenn die zu einer bestimmten LED-Gruppe, bspw. LED-Gruppe 100, zugeordneten LEDs, bspw. 102, 104, 106, von solchen LEDs benachbart umgeben sind, die einer der anderen LED-Gruppen zugeordnet sind, beispielsweise LED-Gruppen 200, 300, 400, 500, 600, 700, 800. Mit anderen Worten ist eine LED der ersten LED-Gruppe 100, bspw. 102, gerade nicht von den übrigen LEDs 104, 106 der ersten LED-Gruppe 100 benachbart umgeben.

In Weiterführung dieses Gedankens wurde die mit Fig. 3 gezeigte Anordnung entwickelt, bei der sich die LEDs aller eingesetzten LED-Gruppen - bspw. LED-Gruppen 100, 200, 300, 400, 500, 600, 700, 800 - sukzessive alternieren. Mit anderen Worten wird zunächst von jeder LED-Gruppe die erste LED, bspw. LED 102 oder LED 202, platziert. Wenn alle ersten LEDs platziert sind, wird die zweite LED 104 der ersten LED-Gruppe 100 und alle ersten LEDs der eingesetzten LED-Gruppen platziert. Dies kann gleichermaßen bei einer entlang einer Linie ausgedehnten länglichen LED-Beleuchtungseinrichtung 1 eingesetzt werden oder bei einer über eine Fläche ausgedehnten LED-Beleuchtungseinrichtung 1.

Angenommen, die erste LED-Gruppe 100 wird stets zu Beginn einer Phase als erste aktiviert und bei Ende einer Phase der Wechselspannung als letzte der LED-Gruppen deaktiviert, werden die LEDs dieser ersten LED-Gruppe 100 als heller empfunden als die LEDs der übrigen LED-Gruppen, da schließlich die zeitlich integrierte Lichtleistung dieser LEDs höher ist. Durch die Verteilung der LEDs der ersten LED-Gruppe 100 über die ausgedehnte LED-Beleuchtungseinrichtung 1 wird eine Verteilung der integrierten Lichtleistung erreicht, wodurch die Homogenität der empfundenen Helligkeit erhöht wird. Dies wird noch dadurch gesteigert, dass eine Vermischung der LEDs mit den LEDs der weiteren LED-Gruppen - 200, 300, 400, 500, 600, 700, 800 - eingesetzt wird. Durch geschickte Wahl des Abstandes zwischen den LEDs kann somit nun eine als schön und homogen wahrnehmbare LED-Beleuchtungseinrichtung 1 realisiert werden, die kostengünstig und mit wenigen Bauteilen herstellbar ist und überdies robust gegenüber Spannungsschwankungen ist.

Fig. 4 zeigt eine Photographie einer von den Erfindern im Labor bereits entwickelten LED-Beleuchtungseinrichtung 1, welche eine Realisierung des mit Fig. 3 gezeigten Schaltplans ist. Gleiche Bezugszeichen stellen daher die gleichen wie zu Fig. 3 beschriebenen Bauteile dar.

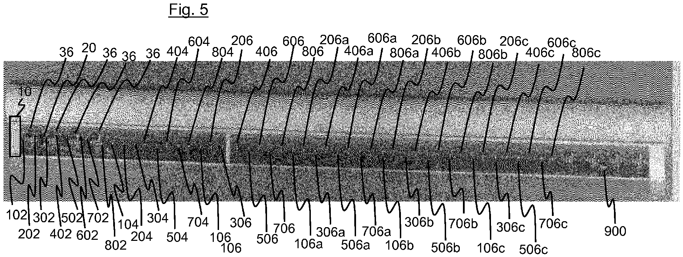

Fig. 5 zeigt eine ausgedehnte LED-Beleuchtungseinrichtung 1 mit einer Vielzahl LEDs. In 8 LED-Gruppen sind bei dieser LED-Beleuchtungseinrichtung 6 LEDs je LED-Gruppe eingesetzt, wobei die LEDs sukzessive alternierend eingesetzt sind. Mit der in Fig. 5 gezeigten LED-Beleuchtungseinrichtung wird im Labor eine homogene Kabinenbeleuchtung für ein Großraumflugzeug getestet, die Überspannungen problemlos mittels des spannungsabführenden Bauteils 900 kompensierbar sind und zugleich auch bei Spannungsschwankungen die LED-Beleuchtungseinrichtung 1 eine konstante Lichtleistung abgibt. Die in diesem Bereich üblichen starken Schwankungen der Versorgungsspannung, die im Stand der Technik bislang störenderweise in der Kabine für alle Passagiere sichtbar war, kann nun mit der Erfindung unsichtbar gemacht werden. Dies stellt auch in psychologischer Hinsicht eine Verbesserung der Sicherheit an Bord dar, da gerade solche leicht sichtbaren Schwankungen und Abweichungen z.B. bei Menschen mit Flugangst das Vertrauen in die Technik nachhaltig stören können.

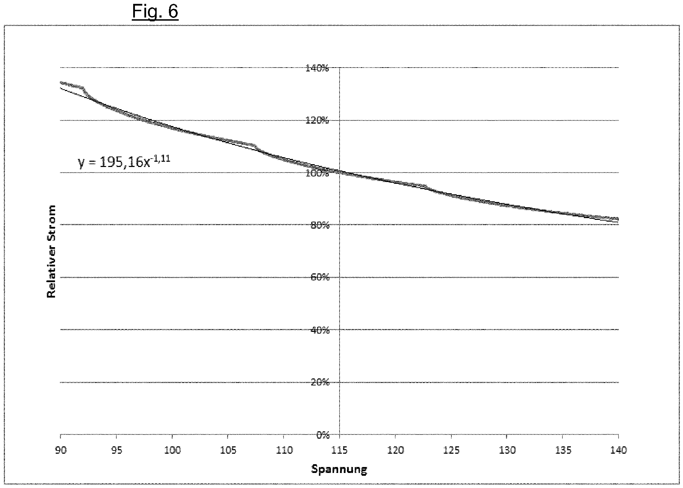

Fig. 6 zeigt, wie die durch die LEDs geführte Stromstärke von der jeweiligen Stromregelung 108 - 208, 308, 408, 508, 608, 708, 808 - bei sich verändernder Spannung so angepasst werden kann, dass die Gesamthelligkeit der LED-Beleuchtungseinrichtung 1 über den gezeigten Eingangsspannungsbereich konstant gehalten wird. Mit dieser komplizierteren Anpassung der Stromstärke kann kompensiert werden, dass die LEDs bei steigender Spannung eine - wenn auch nur gering - steigende Helligkeit zeigen. Der gezeigte Funktionsverlauf der Stromstärke, der mit sichtbaren Knicken die Schaltschwellen berücksichtigt, bei welchen weitere LED-Gruppen zugeschaltet werden, vermag die Lichtabgabe der LED-Beleuchtungseinrichtung 1 noch weiter zu homogenisieren.

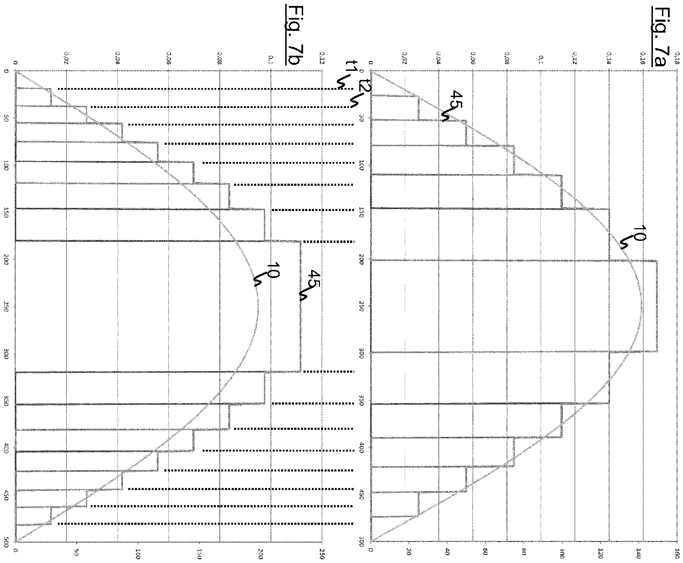

Bei den Figuren 7a und 7b handelt es sich um zwei Graphen, die miteinander durch eine gemeinsame Zeitachse miteinander verknüpft sind. Fig. 7a zeigt einen beispielhaften Spannungsverlauf der Spannungsquelle 10 nach dem Gleichrichter 22 einer maximalen Amplitude von, in diesem Beispiel, 140 Volt. Zunächst steigt bei Beginn des Diagramms t=0 die Quellenspannung an ohne dass LEDs aktivierbar sind, da die Quellenspannung noch unterhalb der Schleusenspannung der LEDs liegt bzw. da die Quellenspannung unterhalb des Vorgabewertes liegt. Bei Erreichen der Schleusenspannung fließt Strom durch die LEDs der ersten LED-Gruppe 100, wodurch die durch die LEDs fließende Stromstärke 45 sprunghaft steigt. Beim erneuten Erreichen des Vorgabewertes werden die LEDs der zweiten LED-Gruppe 200 dazugeschaltet, wodurch die Stromstärke 45 eine Verdopplung erfährt. Die Stromstärke steigt nun weiter in Sprüngen an, wenn weitere LED-Gruppen aktiviert werden. Der gleiche Vorgang wird bei abfallender Flanke umgekehrt durchgeführt, so dass die Stromstärke 45 stufenweise wieder abfällt.

Im unteren Bereich, d.h. in Fig. 7b, ist ein Spannungsverlauf der Spannungsquelle 10 mit einer maximalen Amplitude von beispielsweise 200 Volt, also einer höheren Amplitude als Bereich der Figur 7a, gezeigt.

Der zeitliche Vergleich der beiden Graphen verdeutlicht anhand der eingezeichneten Striche bei t1, t2 etc., dass bei höherer Maximalamplitude der Spannungsquelle die LEDs früher zugeschaltet werden. Das frühere Zuschalten der LEDs bedingt eine höhere Lichtabgabe; Die Stromregelungen sind daher dazu eingerichtet, bei höherer Maximalspannung die Stromstärke 45 zu verringern. Dies kann den Fig. 7a, 7b im Vergleich der beiden Graphen der Stromstärke 45 zueinander ebenfalls entnommen werden.

Überdies wird in dem beispielhaften Spannungsverlauf der Fig. 7b (unterer Graph) eine zusätzliche LED-Gruppe bzw. das spannungsabführende Bauteil 900 aktiviert. Durch die Aktivierung des spannungsabführenden Bauteils 900 kann die elektrische Leistung sicher abgeführt werden, ohne dass eine Erhöhung der Helligkeit der LED-Beleuchtungseinrichtung 1 eintritt.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

### Bezugszeichenliste:

- 1: LED-Beleuchtungseinrichtung
- 10: Spannungsquelle
- 20: Verbindungseinrichtung
- 22: Gleichrichter
- 24: elektrische Leitung
- 26: elektrische Leitung
- 28: elektrische Leitung
- 30: Gruppenaktivierungseinrichtung
- 32: Spannungsmesser
- 34: Spannungssignalleitung
- 36: Signalgeber
- 38: Strommesseinrichtung
- 45: Durch die LEDs fließende Stromstärke
- 100: erste LED-Gruppe
- 102: erste LED der ersten LED-Gruppe
- 104: zweite LED der ersten LED-Gruppe
- 106: dritte LED der ersten LED-Gruppe
- 108: Stromregelung der ersten LED-Gruppe
- 110: Signalleitung zu dem Stromregler der ersten LED-Gruppe
- 112: Schaltvorrichtung der ersten LED-Gruppe
- 200: zweite LED-Gruppe
- 202: erste LED der zweiten LED-Gruppe
- 204: zweite LED der zweiten LED-Gruppe
- 206: dritte LED der zweiten LED-Gruppe
- 208: Stromregelung der zweiten LED-Gruppe
- 210: Signalleitung zu dem Stromregler der zweiten LED-Gruppe
- 212: Schaltvorrichtung der zweiten LED-Gruppe
- 300: dritte LED-Gruppe
- 302: erste LED der dritten LED-Gruppe
- 304: zweite LED der dritten LED-Gruppe
- 306: dritte LED der dritten LED-Gruppe
- 308: Stromregelung der dritten LED-Gruppe
- 310: Signalleitung zu dem Stromregler der dritten LED-Gruppe
- 312: Schaltvorrichtung der dritten LED-Gruppe
- 400: vierte LED-Gruppe
- 402: erste LED der vierten LED-Gruppe
- 404: zweite LED der vierten LED-Gruppe
- 406: dritte LED der vierten LED-Gruppe
- 408: Stromregelung der vierten LED-Gruppe
- 410: Signalleitung zu dem Stromregler der vierten LED-Gruppe
- 412: Schaltvorrichtung der vierten LED-Gruppe
- 500: fünfte LED-Gruppe
- 502: erste LED der fünften LED-Gruppe
- 504: zweite LED der fünften LED-Gruppe
- 506: dritte LED der fünften LED-Gruppe
- 508: Stromregelung der fünften LED-Gruppe
- 510: Signalleitung zu dem Stromregler der fünften LED-Gruppe
- 512: Schaltvorrichtung der fünften LED-Gruppe
- 600: sechste LED-Gruppe
- 602: erste LED der sechsten LED-Gruppe
- 604: zweite LED der sechsten LED-Gruppe
- 606: dritte LED der sechsten LED-Gruppe
- 608: Stromregelung der sechsten LED-Gruppe
- 610: Signalleitung zu dem Stromregler der sechsten LED-Gruppe
- 612: Schaltvorrichtung der sechsten LED-Gruppe
- 700: siebte LED-Gruppe
- 702: erste LED der siebten LED-Gruppe
- 704: zweite LED der siebten LED-Gruppe
- 706: dritte LED d1er siebten LED-Gruppe
- 708: Stromregelung der siebten LED-Gruppe
- 710: Signalleitung zu dem Stromregler der siebten LED-Gruppe
- 712: Schaltvorrichtung der siebten LED-Gruppe
- 900: spannungsabführendes Bauteil
- 902: erste Diode des spannungsabführenden Bauteils
- 904: zweite Diode des spannungsabführenden Bauteils
- 906: dritte Diode des spannungsabführenden Bauteils
- 908: Stromregelung des spannungsabführenden Bauteils
- 910: Signalleitung zu dem Stromregler des spannungsabführenden Bauteils
- 912: Schaltvorrichtung des spannungsabführenden Bauteils
- 106a, b, c, 206a bis 806c: weitere seriell geschaltete LEDs; die erste Ziffer des Bezugszeichens spiegelt die Zugehörigkeit zu einer LED-Gruppe wider

## Patentansprüche

1. LED-Beleuchtungseinrichtung (1) zum Anschluss an eine Wechselspannungsquelle (10), umfassend:
zumindest eine erste (100) und eine zweite LED-Gruppe (200),
zumindest eine, der ersten LED-Gruppe zugeordnete Licht emittierende Diode, LED, (102, 104, 106, 106a, 106b, 106c) sowie zumindest eine, der zweiten LED-Gruppe zugeordnete LED (202, 204, 206, 206a, 206b, 206c), wobei die erste und die zweite LED-Gruppe elektrisch seriell angeordnet sind, eine Verbindungseinrichtung (20) zum Anschließen der LED-Beleuchtungseinrichtung an die Wechselspannungsquelle,
eine Gruppenaktivierungseinrichtung mit
einem Spannungsmesser (32) zum Messen einer aktuell anliegenden Spannungsamplitude der Wechselspannungsquelle,
einem Signalgeber (36) zum Erzeugen einer Aktivierungsvorgabe in
Ansprechen auf die aktuell anliegende Spannungsamplitude,
eine Stromregelung (108, 208, 308, 408, 508, 608, 708, 808) zum Regeln des durch die zumindest erste und zweite LED-Gruppe fließenden Stroms wobei die Aktivierungsvorgabe an die Stromregelung übertragen wird, **dadurch gekennzeichnet, dass** die Gruppenaktivierungseinrichtung die Aktivierungsvorgabe in Ansprechen auf die Steigung des Phasenanstiegs der Wechselspannungsquelle anpasst.

2. LED-Beleuchtungseinrichtung (1) nach dem vorstehenden Anspruch, ferner mit
einer Schaltvorrichtung (112, 212, 312, 412, 512, 612, 712, 812) zum Aktivieren oder Deaktivieren von zumindest einer LED-Gruppe (100, 200, 300, 400, 500, 600, 700, 800) in Ansprechen auf die Aktivierungsvorgabe, so dass die LEDs jeweils gruppenweise aktivierbar oder deaktivierbar sind.

3. LED-Beleuchtungseinrichtung (1) nach einem der vorstehenden Ansprüche,
wobei die LEDs der LED-Gruppen (100, 200, 300, 400, 500, 600, 700, 800) gleichmäßig über eine von der LED-Beleuchtungseinrichtung eingenommene Fläche oder Linie verteilt sind.

4. LED-Beleuchtungseinrichtung (1) nach einem der vorstehenden Ansprüche,
wobei die LEDs der LED-Gruppen (100, 200, 300, 400, 500, 600, 700, 800) schachbrettartig über die von der LED-Beleuchtungseinrichtung eingenommene Fläche oder Linie verteilt sind.

5. LED-Beleuchtungseinrichtung (1) nach einem der vorstehenden Ansprüche,
wobei zumindest eine weitere LED-Gruppe (300, 400, 500, 600, 700, 800) umfasst ist und
wobei jede LED von solchen LEDs benachbart umgeben ist, die einer anderen LED-Gruppe zugeordnet sind.

6. LED-Beleuchtungseinrichtung (1) nach einem der vorstehenden Ansprüche,
wobei die Schaltvorrichtung (112, 212, 312, 412, 512, 612, 712, 812) hergerichtet ist, die Anzahl aktiver LED-Gruppen so einzustellen, dass die LEDs der LED-Gruppen (100, 200, 300, 400, 500, 600, 700, 800) in der Nähe ihrer Nominalspannung betrieben werden.

7. LED-Beleuchtungseinrichtung (1) nach einem der vorstehenden Ansprüche,
ferner mit zumindest einem spannungsabführenden Bauteil (900),
wobei die Schaltvorrichtung (112, 212, 312, 412, 512, 612, 712, 812) hergerichtet ist, eine Überschussspannung über das zumindest eine spannungsabführende Bauteil abzuleiten.

8. LED-Beleuchtungseinrichtung (1) nach dem vorstehenden Anspruch, wobei das zumindest eine spannungsabführende Bauteil (900) ein nichtleuchtendes Bauteil ist, insbesondere nichtleuchtende Dioden oder Widerstände.

9. LED-Beleuchtungseinrichtung (1) nach einem der vorstehenden Ansprüche, wobei die LEDs einem ersten Diodenstrang zugeordnet sind,
ferner mit einem, dem ersten Diodenstrang elektrisch parallel angeordneten zweiten Diodenstrang mit weiteren LEDs.

## Claims

1. An LED lighting device (1) for connection to an AC voltage source (10), comprising:
at least a first (100) and a second LED group (200),
at least one light emitting diode, LED, (102, 104, 106, 106a, 106b, 106c) assigned to the first LED group
and
at least one second LED (202, 204, 206, 206a, 206b, 206c), assigned to the second LED group,
wherein the first and the second LED group are arranged electrically in series, a connection device (20) for connecting the LED lighting device to the AC voltage source, a group activating device with
a voltmeter (32) for measuring a currently present voltage amplitude of the AC voltage source,
a signal generator (36) for generating an activation instruction in
in response to the currently present voltage amplitude,
a current regulator (108, 208, 308, 408, 508, 608, 708, 808) for regulating the current flowing through the at least first and second LED group, wherein the activation instruction is transferred to the current regulator, **characterised in that** the group activation device adapts the activation instruction in response to the gradient of the phase increase of the AC voltage source.

2. The LED lighting device (1) according to the preceding claim, further comprising
a switching device (112, 212, 312, 412, 512, 612, 712, 812) for activating or deactivating at least one LED group (100, 200, 300, 400, 500, 600, 700, 800) in response to the activation instruction, so that each of the LEDs can be activated or deactivated by groups.

3. The LED lighting device (1) according to any of the preceding claims,
wherein the LEDs of the LED groups (100, 200, 300, 400, 500, 600, 700, 800) are distributed evenly over an area or line occupied by the LED lighting device.

4. The LED lighting device (1) according to any of the preceding claims,
wherein the LEDs of the LED groups (100, 200, 300, 400, 500, 600, 700, 800) are distributed chessboard-like over the area or line occupied by the LED lighting device.

5. The LED lighting device (1) according to any of the preceding claims,
wherein at least one further LED group (300, 400, 500, 600, 700, 800) is included and
wherein each LED is surrounded adjacently by LEDs which are assigned to another LED group.

6. The LED lighting device (1) according to any of the preceding claims,
wherein the switching device (112, 212, 312, 412, 512, 612, 712, 812) is configured to adjust the number of active LED groups such that the LEDs of the LED groups (100, 200, 300, 400, 500, 600, 700, 800) are operated close to their rated voltage.

7. The LED lighting device (1) according to any of the preceding claims,
further comprising at least one voltage dissipating component (900),
wherein the switching device (112, 212, 312, 412, 512, 612, 712, 812) is configured to discharge a surplus voltage via the at least one voltage dissipating component.

8. The LED lighting device (1) according to the preceding claim, wherein the at least one voltage dissipating component (900) is a non-illuminating component, in particular non-illuminating diodes or resistances.

9. The LED lighting device (1) according to any of the preceding claims, wherein the LEDs are assigned to a first diode string,
further comprising a second diode string comprising further LEDs,
arranged electrically in parallel with the first diode string.

## Revendications

1. Dispositif d'éclairage à DEL (1) à raccorder à une source de tension alternative (10), comprenant :
au moins un premier (100) et un second (200) groupe de DEL,
au moins une diode électroluminescente, DEL (102, 104, 106, 106a,
106b, 106c) attribuée au premier groupe de DEL, ainsi
qu'au moins une DEL
(202, 204, 206, 206a, 206b, 206c) attribuée au second groupe de DEL, les premier et second groupes de DEL étant disposés électriquement en série, un dispositif de connexion (20) pour raccorder le dispositif d'éclairage à DEL à la source de tension alternative, un dispositif d'activation de groupe avec
un voltmètre (32) pour la mesure d'une amplitude de tension se produisant réellement sur la source de tension alternative,
un émetteur de signal (36) pour la production d'une indication d'activation
en réponse à l'amplitude de tension se produisant réellement,
une commande de courant (108, 208, 308, 408, 508, 608, 708, 808) pour la commande du courant circulant à travers les au moins premier et second groupes de DEL, l'indication d'activation étant transmise à la commande de courant, **caractérisé en ce que** le dispositif d'activation de groupe adapte l'indication d'activation en réponse à la montée de phase de la source de tension alternative.

2. Dispositif d'éclairage à DEL (1) selon la revendication précédente, comprenant en outre un dispositif de commutation (112, 212, 312, 412, 512, 612, 712, 812) pour activer ou désactiver au moins un groupe de DEL (100, 200, 300, 400, 500, 600, 700, 800) en réponse à l'indication d'activation, de sorte que les DEL puissent être activées ou désactivées respectivement par groupe.

3. Dispositif d'éclairage à DEL (1) selon une des revendications précédentes,
les DEL des groupes de DEL (100, 200, 300, 400, 500, 600, 700, 800) étant réparties de manière uniforme sur une ligne ou surface occupée par le dispositif d'éclairage à DEL.

4. Dispositif d'éclairage à DEL (1) selon une des revendications précédentes,
les DEL des groupes de DEL (100, 200, 300, 400, 500, 600, 700, 800) étant réparties en damier sur la ligne ou surface occupée par le dispositif d'éclairage à DEL.

5. Dispositif d'éclairage à DEL (1) selon une des revendications précédentes,
au moins un autre groupe de DEL (300, 400, 500, 600, 700, 800) étant inclus et
chaque DEL étant entourée de façon adjacente par des DEL, qui sont attribuées à un autre groupe de DEL.

6. Dispositif d'éclairage à DEL (1) selon une des revendications précédentes,
le dispositif de commutation (112, 212, 312, 412, 512, 612, 712, 812) étant conçu pour régler le nombre de groupes de DEL actifs de sorte que les DEL des groupes de DEL (100, 200, 300, 400, 500, 600, 700, 800) soient actionnées à proximité de leur tension nominale.

7. Dispositif d'éclairage à DEL (1) selon une des revendications précédentes,
comprenant en outre au moins un composant d'évacuation de tension (900),
le dispositif de commutation (112, 212, 312, 412, 512, 612, 712, 812) étant conçu pour diriger une tension excessive par le biais du au moins un composant d'évacuation de tension.

8. Dispositif d'éclairage à DEL (1) selon la revendication précédente, le au moins un composant d'évacuation de tension (900) étant un composant non lumineux, en particulier des résistances ou diodes non lumineuses.

9. Dispositif d'éclairage à DEL (1) selon une des revendications précédentes, les DEL étant attribuées à un premier brin de diodes,
comprenant en outre un second brin de diodes disposé électriquement en parallèle avec le premier brin de diodes, constitué d'autres DEL.
